# EUROPÄISCHE PATENTSCHRIFT

(11) **EP 3 516 760 B1**
(45) Veröffentlichungstag und Bekanntmachung des Hinweises auf die Patenterteilung: **09.09.2026**
(21) Anmeldenummer: 17749609.8
(22) Anmeldetag: 19.07.2017
(51) Int. Cl.: H02M 5/44, H02M 7/00, H02M 5/458, H02M 3/158, H02M 1/00

(54) **SYSTEM UND VERFAHREN ZUM BETREIBEN EINES SYSTEMS**
SYSTEM AND METHOD FOR OPERATING A SYSTEM
SYSTÈME ET PROCÉDÉ DE FONCTIONNEMENT D'UN SYSTÈME

(30) Priorität: 22.09.2016 DE 102016011423
(43) Veröffentlichungstag der Anmeldung: 31.07.2019
(73) Patentinhaber: SEW-EURODRIVE GmbH & Co. KG, 76646 Bruchsal (DE)
(72) Erfinder: SCHMIDT, Josef, 76676 Graben-Neudorf (DE); HAUCK, Matthias, 68723 Schwetzingen (DE); WEBER, Jochen, 68723 Plankstadt (DE)
(86) Internationale Anmeldenummer: PCT/EP2017/025217
(87) Internationale Veröffentlichungsnummer: WO 2018/054543

(56) Entgegenhaltungen:
- JP-A- 2003 259 566
- JP-A- H01 308 136
- US-A1- 2001 013 447
- ANGKITITRAKUL S ET AL: "Active Inductor Current Balancing for Interleaving Multi-Phase Buck-Boost Converter", APPLIED POWER ELECTRONICS CONFERENCE AND EXPOSITION, 2009. APEC 2009. TWENTY-FOURTH ANNUAL IEEE, IEEE, PISCATAWAY, NJ, USA, 15 February 2009 (2009-02-15), pages 527 - 532, XP031442729, ISBN: 978-1-4244-2811-3

## Beschreibung

Die Erfindung betrifft ein System und ein Verfahren zum Betreiben des Systems.

Es ist allgemein bekannt, dass die Drehzahl eines Drehstrommotors mittels eines ihn speisenden Wechselrichters änderbar ist.

**Aus der** US 2007 / 0 137 945 A1 **ist eine Aufzugssteuerung bekannt.**

**Aus der** JP H06-225 458 A1 **ist eine Leistungssteuerungsmethode bekannt.**

**Aus der** WO 01/74699 A1 **ist ein Verfahren zur Reduktion der Netzanschlussleistung von Aufzugsanlagen bekannt.**

**Aus der** DE 10 2013 006 964 A1 **ist eine Vorrichtung zum Betreiben einer Anlage bekannt.**

**Aus der** JP H01 308 136 A **ist als nächstliegender Stand der Technik eine netzseitige Stromerfassung bekannt, deren Stromsignal einem DC/DC-Wandler zugeführt wird, über den Energie aus einem Energiespeicher in den Zwischenkreis eines Umrichters zuführbar ist.**

**Aus der** JP 2003 259566 A **ist eine Leistungsregelung bei einem Wechselspannungsnetzteil bekannt.**

**Aus der** US 2001/013 447 A1 **ist eine Luftkonditionieranlage bekannt.**

Der Erfindung liegt daher die Aufgabe zugrunde, ein Antriebssystem in einfacher Weise kostengünstig herstellbar weiterzubilden.

**Erfindungsgemäß wird die Aufgabe bei dem Verfahren zum Betreiben eines Systems nach den in Anspruch 1 angegebenen Merkmalen gelöst.**

Wichtige Merkmale der Erfindung bei dem System sind, dass das System einen aus einem elektrischen Wechselspannungsversorgungsnetz versorgbaren Gleichrichter, einen Wechselrichter, welcher einen Elektromotor speist, und einen mit einem Energiespeicher verbundenen DC/DC-Wandler umfasst,
wobei der gleichspannungsseitige Anschluss des Wechselrichters mit dem gleichspannungsseitigen Anschluss des Gleichrichters verbunden ist,
insbesondere wobei der Elektromotor aus dem wechselspannungsseitigen Anschluss des Wechselrichters versorgt ist,
wobei ein erster gleichspannungsseitiger Anschluss des DC/DC-Wandlers mit dem gleichspannungsseitigen Anschluss des Gleichrichters verbunden ist,
insbesondere wobei der gleichspannungsseitige Anschluss des Wechselrichters und der erste gleichspannungsseitige Anschluss des DC/DC-Wandlers parallelgeschaltet sind,
wobei der DC/DC-Wandler ein Gehäuse aufweist, in welchem ein Mittel zur Stromerfassung angeordnet ist, welches
   - den am gleichspannungsseitigen Anschluss des Gleichrichters den aus dem Gleichrichter austretenden Strom
      erfasst und der erfasste Wert einer im Gehäuse des DC/DC-Wandlers angeordneten Signalelektronik zugeleitet wird, welche Ansteuersignale für Halbleiterschalter des DC/DC-Wandlers erzeugt.

Von Vorteil ist dabei, dass das zusätzliche Stromerfassungsmittel im Gehäuse des Wandlers gehäusebildend umgeben und geschützt ist. Dadurch ist es sehr einfach ermöglicht, das Sensorsignal der Signalelektronik des Wandlers zuzuleiten. Somit ist das Antriebssystem einfach herstellbar. Dabei sind Störungen in einfacher Weise vermeidbar, weil das Gehäuse aus Metall ausführbar ist und somit Störstrahlung abschirmbar ist.

Bei der Ausgestaltung ist der Wechselrichter in einem zweiten, insbesondere anderen, Gehäuse angeordnet, insbesondere wobei das zweite Gehäuse beabstandet ist vom ersten Gehäuse, wobei das Mittel zur Stromerfassung im ersten Gehäuse, also im Gehäuse des DC/DC-Wandlers, angeordnet ist und mit einer weiteren elektrischen Anschlussvorrichtung, insbesondere Steckverbinderteil, verbunden ist, wobei die weitere elektrische Anschlussvorrichtung mit dem gleichspannungsseitigen Anschluss des Wechselrichters elektrisch verbunden ist.

Von Vorteil ist dabei, dass die Erfassung des Eingangsstroms am Gleichrichter ortsnah zur Signalelektronik des DC/DC-Wandlers erfolgt und somit die Erfassung in einfacher Weise mit der Signalelektronik des DC/DC-Wandlers verbindbar ist. Zusätzlich ist der Wandler einfach herstellbar, indem beispielsweise in der Gehäusewand Ausnehmungen herstellbar sind, in welchen dann Steckverbinderteile aufnehmbar sind. Somit sind die Zuleitungen und Ableitungen mittels Steckverbindungen in einfacher Weise herstellbar. **Da der Gleichrichter im Gehäuse des Wandlers angeordnet ist, muss die Netzversorgung auch dorthin geführt werden. Gleichspannungsseitig am Gleichrichter ist dann die Eingangsstromerfassung angeordnet. Die Gleichspannungsseite des Wechselrichters muss jedoch zum Gehäuse des Wandlers geführt werden.**

Wichtige Merkmale sind, dass von der Signalelektronik des DC/DC-Wandlers eine Reglereinheit umfasst ist, welche die aus dem Wechselspannungsversorgungsnetz insbesondere über den Gleichrichter aufgenommene Leistung auf einen Sollwert hin regelt, indem
aus dem Verlauf der Differenz zwischen dem vom Gleichrichter aus dem Wechselspannungsversorgungnetz aufgenommenen Leistung (P_Netz) und einem Sollwert (P_Netz_Soll) von einem Regler, insbesondere Pl-Regler, ein Sollwert für Ladestrom (I_CP_Soll) als Stellgrößensignal bestimmt wird,
wobei der erfasste Ladestrom des Energiespeichers auf den Sollwert für Ladestrom (I_CP_Soll) hingeregelt wird, indem Ansteuersignale für die Halbleiterschalter des DC/DC-Wandlers 4 mit einem entsprechenden Pulsmuster erzeugt werden,
wobei am Regler ein Vorsteuerpfad, insbesondere Störgrößenaufschaltpfad, vorgesehen ist, so dass als Vorsteuersignal, insbesondere Störgrößensignal, die vom Elektromotor über den Wechselrichter abgegebene oder aufgenommene Leistung wirksam ist. Von Vorteil ist dabei, dass eine einfache Regelung zur Verminderung der aus dem Netz bezogenen Leistung vorsehbar ist.

Ein Ladestrom mit negativem Vorzeichen ist ein Entladestrom.

Bei der Ausgestaltung wird die vom Gleichrichter aus dem Wechselspannungsversorgungnetz aufgenommenen Leistung (P_Netz) bestimmt durch Multiplikation des erfassten aus dem gleichspannungsseitigen Anschluss des Gleichrichters austretenden Stroms und der am gleichspannungsseitigen Anschluss des Gleichrichters anliegenden Spannung. Von Vorteil ist dabei, dass der aus dem Netz entnommene Strom reduzierbar ist.

Bei der Ausgestaltung wird der Stellgröße ein einer Verlustleistung entsprechendes Signal aufsummiert. Von Vorteil ist dabei, dass die realen Bedingungen in der Regelstruktur möglichst gut berücksichtigt werden.

Bei der Ausgestaltung wird abhängig von dem Ladezustand des Energiespeichers der Ladestrom begrenzt. Von Vorteil ist dabei, dass der Energiespeicher vor Überladung geschützt wird.

Bei der Ausgestaltung ist der DC/DC-Wandler als doppelt ausgeführter, kaskadierter Ab-Aufwärtswandler ausgeführt,
die zwei parallelgeschalteten Teile aufweist. Von Vorteil ist dabei, dass eine geringere Stromwelligkeit erreichbar ist, insbesondere durch versetztes Takten der Teile.

Bei der Ausgestaltung weist der erste Teil eingangsseitig und ausgangsseitig jeweils eine Halbbrücke auf, deren Knoten über eine erste Induktivität L1 verbunden ist,
der zweite Teil eingangsseitig und ausgangsseitig jeweils eine Halbbrücke aufweist, deren Knoten über eine zweite Induktivität L2 verbunden ist,
wobei ein Mittel zur Erfassung des Summenstroms der Induktivitäten vorgesehen ist, also ein Mittel zur Erfassung der Summe der durch die beiden Induktivitäten (L1, L2) fließenden Ströme,
insbesondere wobei jede Halbbrücke aus einer Reihenschaltung von zwei Halbleiterschaltern gebildet ist,
wobei der erfasste Summenstrom I als Ladestrom I_CP einer Reglereinheit zum Hinregeln auf den Stellgrößenwert I_CP_Soll als Sollwert zugeführt wird, indem der Regler das Pulsmuster der Ansteuersignale der Halbleiterschalter der Halbbrücken bestimmt. Von Vorteil ist dabei, dass der erfasste Summenstrom dem Ladestrom entspricht.

Die Erfindung wird nun anhand von Abbildungen näher erläutert:
In der Figur 1 ist das erfindungsgemäße System mit einem über einen DC/DC-Wandler 4 an einem Zwischenkreis angeschlossenen Energiespeicher 5 schematisch skizziert.
In der Figur 2 ist ein Regler zum Betreiben des Systems gezeigt, der den aus dem Wechselspannungsversorgungsnetz entnommenen Strom auf einen Sollwert hin regelt.
In der Figur 3 ist eine vorteilhafte Ausführung des DC/DC-Wandlers 4 gezeigt.
In der Figur 4 ist ein alternatives Regelverfahren für das Regeln der vom Wechselspannungsversorgungsnetz aufgenommenen Leistung gezeigt.

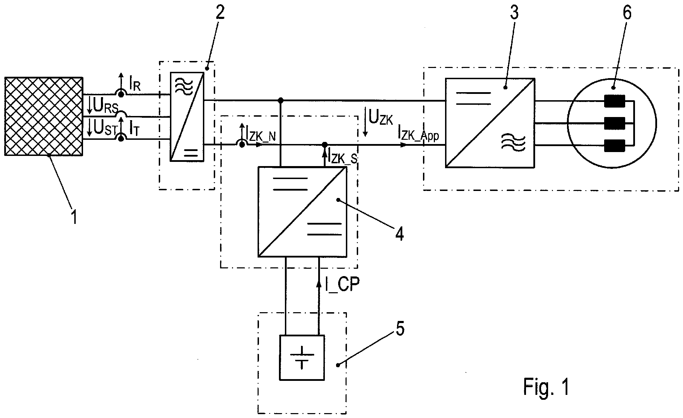

Wie in Figur 1 gezeigt, wird ein Gleichrichter 2 an seinem wechselspannungsseitigen Anschluss aus einem dreiphasigen Wechselspannungsversorgungsnetz 1 versorgt. Hierzu sind drei Netzphasenleitungen vorhanden, wobei in zumindest zwei der drei Phasenleitungen Stromerfassungen (I_R, I_T) vorgesehen sind.

Die zwischen den Phasenleitungen vorhandenen jeweiligen Spannungen werden als U_RS, U_ST beziehungsweise U_TR bezeichnet.

Am gleichstromseitigen Anschluss des Gleichrichters 2 liegt die Spannung U_ZK, also Zwischenkreisspannung, an. Aus dem gleichstromseitigen Anschluss des Gleichrichters 2 tritt der Strom I_ZK_N aus.

Gemäß der Erfindung wird statt der netzseitigen Stromerfassungen ein Erfassen des Stromes I_ZK_N verwendet.

Der gleichstromseitige Anschluss eines DC/DC-Wandlers 4 und der gleichstromseitige Anschluss eines einen Elektromotor 6 speisenden Wechselrichters 3 sind parallelgeschaltet und aus dem gleichstromseitigen Anschluss des Gleichrichters 2 versorgbar, insbesondere wobei der gleichstromseitige Anschluss des Gleichrichters 2 ebenfalls parallelgeschaltet ist.

Der Motor 6 ist vorzugsweise als Drehstrommotor ausgeführt und am wechselspannungsseitigen Anschluss des Wechselrichters 3 angeschlossen.

Das Gehäuse des DC/DC-Wandlers umfasst das Mittel zur Stromerfassung des aus dem gleichstromseitigen Anschluss des Gleichrichters 2 austretenden Stromes I_ZK_N.

Gemäß einer nicht beanspruchten Alternative sind die Mittel zur Stromerfassung der in den Netzphasen (I_R, I_T) fließenden Ströme innerhalb des Gehäuses des DC/DC-Wandlers 4 angeordnet.

Am anderen gleichspannungsseitigen Anschluss des DC/DC-Wandlers 4 ist ein Energiespeicher 5, insbesondere aufweisend zumindest eine Akkumulatorzelle, Batteriezelle, Kondensator und/oder Ultracap-Zelle, angeschlossen.

Der an diesem anderen gleichspannungsseitigen Anschluss des DC/DC-Wandlers 4 austretende Ladestrom I_CP des Energiespeichers 5 wird mit einem Mittel zur Stromerfassung erfasst und der erfasste Wert einer Signalelektronik zugeführt, welche einen Regler aufweist, welcher den Wert auf einen Sollwert I_CP_Soll hinregelt, indem der DC-DC-Wandler als Stellglied benutzt wird.

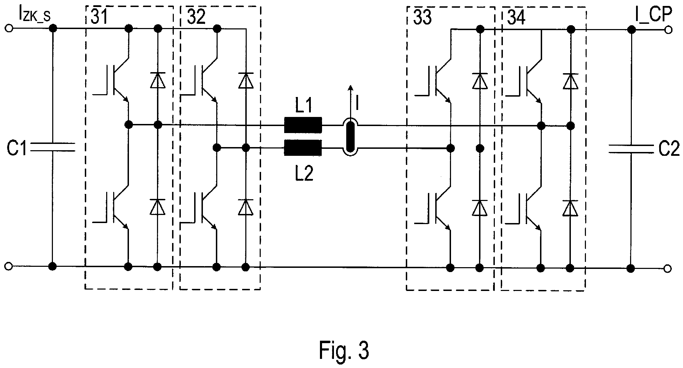

Wie in Figur 1 zusammen mit Figur 3 ersichtlich, wird jedoch der DC/DC-Wandler als doppelt ausgeführter und somit zwei parallel geschaltete Teile aufweisender, kaskadierter Auf- /Abwärtswandler ausgeführt und der mittig im DC /DC-Wandler 4 erfasste Summenstrom I auf einen Sollwert, insbesondere den Sollwert I_CP_Soll oder auf einen dazu proportionalen Sollwert, hingeregelt, indem die Ansteuersignale der Schalter des DC/DC-Wandlers 4 entsprechend erzeugt werden, insbesondere also das Pulsmuster, insbesondere das Pulsweitenmodulationsverhältnis, entsprechend gestellt wird.

Dabei weist jeder Teil des doppelt ausgeführten Wandlers 4 eine eingangsseitige Halbbrücke (31 beziehungsweise 32) und eine ausgangsseitige Halbbrücke (33 beziehungsweise 34) auf, deren Knotenpunkt mittels einer jeweiligen Induktivität (L1, L2) verbunden sind. Der Summenstrom I, also die Summe des durch die Induktivität L1 des ersten Teils fließenden Stroms und des durch die Induktivität L2 des zweiten Teils fließenden Stroms wird erfasst mittels eines Strommessmittels. Dieses Strommessmittel ist durch einen Ringkern realisiert, um den die jeweilige Zuleitung der jeweiligen Induktivität L1 beziehungsweise L2 gewickelt ist und um den eine zusätzliche Wicklung zur Erfassung der induzierten Spannung ausgeführt ist.

Jede der Halbbrücken (31, 32, 33, 34) weist zwei steuerbare Halbleiterschalter auf, die in Reihe geschaltet sind, also am Knotenpunkt verbunden sind.

Die doppelt kaskadierte Ausführung des Wandlers 4 bewirkt eine geringe Stromwelligkeit. Diese ist besonders verminderbar durch ein versetztes Takten der beiden Teile des Wandlers 4, insbesondere mit 180° gegeneinander verschobenen Ansteuersignalen.

Zum Hinregeln des Summenstroms I auf den Sollwert I_CP_Soll oder einen dazu proportionalen Sollwert ist ein in den Figuren nicht dargestellter Regler vorgesehen, welcher von der Signalelektronik des DC/DC-Wandlers 4 umfasst ist. Gestellt wird dabei - wie oben beschrieben - das Pulsmuster der Ansteuersignale der Halbleiterschalter des Wandlers 4.

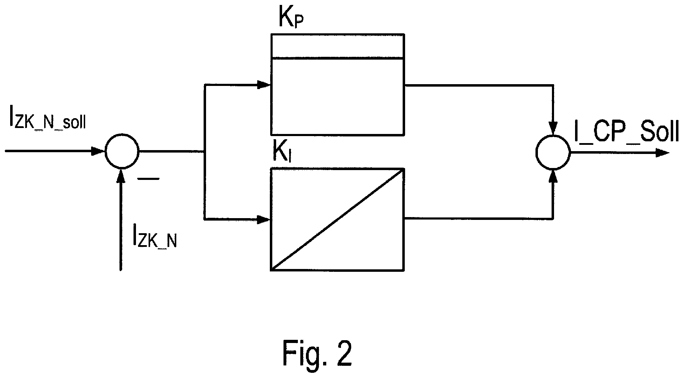

Der Sollwert I_CP_Soll wird als Stellgröße von der in Figur 2, die eine nicht beanspruchtes Beispiel zeigt, gezeigten, ebenfalls von der Signalelektronik umfassten Reglervorrichtung bestimmt, indem der mittels des im Wandler 4 angeordneten Mittels zur Erfassung des Stromes I_ZK_N erfasste Stromwert I_ZK_N als Istwert verwendet wird und die Differenz zu einem vorgebbaren, insbesondere als Parameter vorgebbaren, Sollwert I_ZK_N_Soll bestimmt wird. Diese Differenz wird dann dem linearen Regler, also dem Proportionalanteil K_P und dem Integralanteil K_I, zugeführt, dessen Ausgangssignal, also Stellgröße, als Sollwert I_CP_Soll verwendet wird.

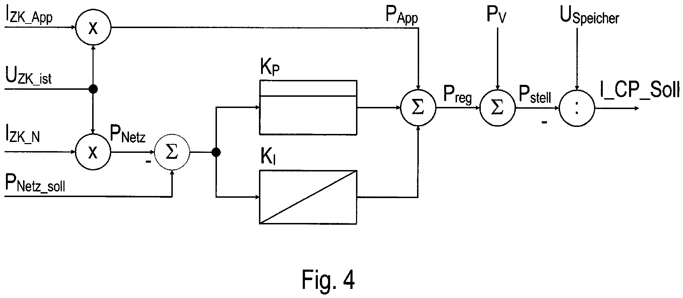

In dem in Figur 4 dargestellten Regelverfahren, das alternativ zu dem in Figur 2 gezeigten Regelverfahren in einem Ausführungsbeispiel angewendet wird, wird der Sollwert I_CP_Soll über eine Bestimmung der aus dem Wechselspannungsversorgungsnetz entnommenen Leistung bestimmt.

Hierzu wird der erfasste Strom, welcher am gleichspannungsseitigen Anschluss des Gleichrichters 2 austritt, multipliziert mit der am gleichspannungsseitigen Anschluss des Gleichrichters 2 anliegenden und erfassten Spannung. Die Differenz zwischen dem so erhaltenen Leistungswert P_Netz und einem vorgebbaren Sollwert P_Netz_Soll wird einem linearen Regler zugeführt, insbesondere der wiederum einen Proportionalanteil K_P und einen Integralanteil K_I aufweist.

Dem Ausgangssignal des Reglers wird das Leistungssignal P_App über einen Vorsteuerpfad, insbesondere also Störgrößenaufschaltpfad, aufsummiert, welches durch Multiplikation der am gleichspannungsseitigen Anschluss des Gleichrichters 2 anliegenden Spannung und des am gleichspannungsseitigen Anschluss des Wechselrichters 3 zugeführten Stromes I_ZK_App bestimmt wird. Dabei wird das Leistungssignal P_App durch Multiplikation der am gleichstromseitigen Anschluss des Gleichrichters 2 anliegenden und erfassten Spannung U_ZK_ist mit dem aus dem gleichstromseitigen Anschluss des Wechselrichters 3 austretenden Strom multipliziert.

Das um das Leistungssignal P_App vergrößerte Ausgangssignal des Reglers wird als P_reg bezeichnet, wobei ein Verlustleistungssignal P_V aufsummiert wird, welches die Verlustleistung des Energiespeichersystems repräsentiert.

Das so erhaltene Leistungssignal P_stell wird durch den am Energiespeicher 5 anliegenden und erfassten Spannungswert U_Speicher dividiert, so dass der Sollwert I_CP_Soll bestimmt ist.

Wie auch zum vorigen Beispiel beschrieben, regelt der in den Figuren nicht gezeigte Regler den im DC/DC-Wandler 4 erfassten Summenstrom I auf den so bestimmten Sollwert I_CP_Soll oder einen hierzu proportionalen Sollwert hin, indem das Pulsmuster der Ansteuersignale der Halbleiterschalter des DC/DC-Wandlers 4 entsprechend gestellt werden.

Auf diese Weise ist im Gegensatz zum vorbeschriebenen Beispiel nicht der aus dem Wechselspannungsversorgungsnetz entnommene Strom, sondern die aus dem Wechselspannungsversorgungsnetz Leistung begrenzbar und möglichst gering haltbar. das Verlustleistungssignal P_V berücksichtigt dabei die Leerlaufleistung des Systems und die Verluste des DC/DC-Wandlers 4.

Die Überladung des Energiespeichers 5 wird vermieden, indem der maximal zulässige Ladestrom I_CP_Soll bei Überschreiten eines kritischen Spannungswertes abhängig von dem Betrag der Überschreitung, insbesondere also abhängig von der Differenz zwischen der am Energiespeicher 5 anliegenden Spannung und dem kritischen Spannungswert, begrenzt wird, insbesondere mit zunehmendem Betrag der Differenz auf einen abnehmenden Wert begrenzt wird, bis Null erreicht ist, insbesondere bei Erreichen der Ladeschlussspannung.

Bei weiteren erfindungsgemäßen Ausführungsbeispielen wird zusätzlich ein überlagerter Ladezustandsregler vorgesehen, welcher eine vorzugsweise deutlich größere Zeitkonstante als die Zykluszeit der vom Motor angetriebenen Applikation aufweist, Dabei regelt der überlagerte Ladezustandsregler den Ladezustand auf einen mittleren Ladezustand hin und zwar derart, dass während des generatorischen Betriebes der Applikation der Maximalladezustand des Energiespeichers nicht überschritten wird und dass während des motorischen Betriebes der Applikation der Sollwert der aus dem Wechselspannungsversorgungsnetz bezogenen Leistung P_Netz_Soll nicht überschritten wird.

Bei weiteren erfindungsgemäßen Ausführungsbeispielen ist ein Mittel zum Erkennen eines Netzausfalls vorgesehen, dessen Ausgangssignal nach Überschreiten oder Unterschreiten eines Schwellwertes entweder ein Abschalten des Wechselrichters 3 bewirkt oder ein Versorgen des Wechselrichters 3 aus dem Energiespeicher 5 veranlasst, so dass eine USV-Funktionalität erreicht ist, insbesondere also die Funktionalität einer unterbrechungsfreien Stromversorgung.

Die Bezugszeichenliste wird miteinbezogen in die Figurenbeschreibung.

### Bezugszeichenliste

1 Wechselspannungsversorgungsnetz
2 Gleichrichter
3 Wechselrichter für Elektromotor 6
4 DC/DC-Wandler für Energiespeicher 5
5 Energiespeicher, insbesondere aufweisend Akkumulatorzelle, Batteriezelle, Kondensator und/oder Ultracap-Zelle
6 Elektromotor
31 erste Halbbrücke
32 zweite Halbbrücke
33 dritte Halbbrücke
34 vierte Halbbrücke
I_R Stromerfassung in der ersten Netzphase
I_S Stromerfassung in der zweiten Netzphase
I_T Stromerfassung in der dritten Netzphase
U_RS erste Netzspannung
U_ST zweite Netzspannung
U_TR dritte Netzspannung
U_ZK_Ist Istwert der am gleichstromseitigen Anschluss des Gleichrichters 2 anliegenden Spannung
I_ZK_N am gleichstromseitigen Anschluss des Gleichrichters 2 austretender Strom
I_ZK_App am gleichstromseitigen Anschluss des Wechselrichters 3 austretender Strom
I_ZK_S am gleichstromseitigen Anschluss des DC/DC_Wandlers 4 austretender Strom
U_ZK am gleichstromseitigen Anschluss des Gleichrichters 2 anliegende Spannung
I_ZK_N_Soll Sollwert für den am gleichstromseitigen Anschluss des Gleichrichters austretenden Strom I_ZK_N
K_P Proportionalanteil
K_I Integralanteil
I_S_Soll Sollwert des Stromanteils der zweiten Netzphase
I_CP_Soll Sollwert des aus dem Energiespeicher 5 austretenden Stroms
C1 erster Kondensator
C2 zweiter Kondensator
L1 erste Induktivität
L2 zweite Induktivität
P_Netz_Soll Sollwert der vom Wechselspannungsversorgungsnetz aufgenommenen Leistung
P_Netz vom Wechselspannungsversorgungsnetz aufgenommene Leistung
P_APP vom insbesondere zweiten Motor aufgenommene Leistung
P_V Verlustleistung
U_Speicher am Energiespeicher anliegende Spannung
P_reg ideal zu stellende Leistung
P_Stell Stellwert der Leistung
I erfasster Ausgleichsstrom

## Patentansprüche

1. **Verfahren zum Betreiben eines Systems,**
umfassend einen aus einem elektrischen Wechselspannungsversorgungsnetz versorgbaren Gleichrichter, einen Wechselrichter, welcher einen Elektromotor speist, und einen mit einem Energiespeicher verbundenen DC/DC-Wandler,
der gleichspannungsseitige Anschluss des Wechselrichters mit dem gleichspannungsseitigen Anschluss des Gleichrichters verbunden ist,
insbesondere wobei der Elektromotor aus dem wechselspannungsseitigen Anschluss des Wechselrichters versorgt ist,
wobei ein erster gleichspannungsseitiger Anschluss des DC/DC-Wandlers mit dem gleichspannungsseitigen Anschluss des Gleichrichters verbunden ist,
insbesondere wobei der gleichspannungsseitige Anschluss des Wechselrichters und der erste gleichspannungsseitige Anschluss des DC/DC-Wandlers parallelgeschaltet sind,
**wobei der DC/DC-Wandler ein erstes Gehäuse aufweist, in welchem ein Mittel zur Stromerfassung angeordnet ist,**
**wobei das Mittel zur Stromerfassung**
- **den am gleichspannungsseitigen Anschluss des Gleichrichters den aus dem Gleichrichter austretenden Strom**
**erfasst und der erfasste Wert einer im Gehäuse des DC/DC-Wandlers angeordneten Signalelektronik zugeleitet wird, welche Ansteuersignale für Halbleiterschalter des DC/DC-Wandlers erzeugt,**
**wobei das Mittel zur Stromerfassung im ersten Gehäuse, also im Gehäuse des DC/DC-Wandlers, angeordnet ist und mit einer weiteren elektrischen Anschlussvorrichtung, insbesondere Steckverbinderteil, verbunden ist, wobei die weitere elektrische Anschlussvorrichtung mit dem gleichspannungsseitigen Anschluss des Wechselrichters elektrisch verbunden ist.**
**dadurch gekennzeichnet, dass**
**die vom Gleichrichter aus dem Wechselspannungsversorgungnetz aufgenommenen Leistung (P_Netz) bestimmt wird durch Multiplikation des erfassten aus dem gleichspannungsseitigen Anschluss des Gleichrichters austretenden Stroms und der am gleichspannungsseitigen Anschluss des Gleichrichters anliegenden Spannung,**
**wobei der Wechselrichter in einem zweiten, insbesondere anderen, Gehäuse angeordnet ist, wobei das zweite Gehäuse beabstandet ist vom ersten Gehäuse,**
**wobei die Netzphasenleitungen des Wechselspannungsversorgungsnetzes einer am oder im ersten Gehäuse angeordneten elektrischen Anschlussvorrichtung, insbesondere Steckverbinderteil, zugeführt sind,**
**wobei mit der elektrischen Anschlussvorrichtung das Mittel zur Stromerfassung elektrisch verbunden ist,**
**wobei von der Signalelektronik des DC/DC-Wandlers eine Reglereinheit umfasst ist, welche**
**die aus dem Wechselspannungsversorgungsnetz insbesondere über den Gleichrichter aufgenommene Leistung auf einen Sollwert hin regelt, indem**
**aus dem Verlauf der Differenz zwischen dem vom Gleichrichter aus dem Wechselspannungsversorgungnetz aufgenommenen Leistung (P Netz) und einem Sollwert (P Netz Soll) von einem Regler, insbesondere PI-Regler, ein Sollwert für Ladestrom (I CP Soll) als Stellgrößensignal bestimmt wird,**
**wobei der erfasste Ladestrom des Energiespeichers auf den Sollwert für Ladestrom (I_CP_Soll) hingeregelt wird, indem Ansteuersignale für die Halbleiterschalter des DC/DC-Wandlers (4) mit einem entsprechenden Pulsmuster erzeugt werden,**
**wobei am Regler ein Vorsteuerpfad, insbesondere Störgrößenaufschaltpfad, vorgesehen ist, so dass als Vorsteuersignal, insbesondere Störgröße, die vom Elektromotor über den Wechselrichter abgegebene oder aufgenommene Leistung wirksam ist,**
**wobei der Stellgröße ein einer Verlustleistung entsprechendes Signal aufsummiert wird,**
**welches die Leerlaufleistung des Systems und die Verluste des DC/DC-Wandlers (4) berücksichtigt,**
**wobei abhängig von dem Ladezustand des Energiespeichers der Ladestrom begrenzt wird,**
**wobei der Gleichrichter im Gehäuse des DC/DC-Wandlers angeordnet ist**
**wobei der DC/DC-Wandler als doppelt ausgeführter, kaskadierter Ab-Aufwärtswandler ausgeführt ist,**
**also der DC/DC-Wandler zwei parallel geschaltete Teile aufweist,**
**wobei die Halbleiterschalter der Teile relativ zueinander zeitlich versetzt getaktet angesteuert werden,**
**wobei der erste Teil eingangsseitig und ausgangsseitig jeweils eine Halbbrücke aufweist, deren Knoten über eine erste Induktivität L1 verbunden ist,**
**wobei der zweite Teil eingangsseitig und ausgangsseitig jeweils eine Halbbrücke aufweist, deren Knoten über eine zweite Induktivität L2 verbunden ist,**
**wobei ein Mittel zur Erfassung des Summenstroms der Induktivitäten vorgesehen ist, also ein Mittel zur Erfassung der Summe der durch die beiden Induktivitäten (L1, L2) fließenden Ströme,**
**wobei das Mittel durch einen Ringkern realisiert ist, um den die jeweilige Zuleitung der jeweiligen Induktivität (L1, L2) gewickelt ist und um den eine zusätzliche Wicklung zur Erfassung der induzierten Spannung ausgeführt ist,**
**insbesondere wobei jede Halbbrücke aus einer Reihenschaltung von zwei Halbleiterschaltern gebildet ist,**
**wobei der erfasste Summenstrom I als Ladestrom I_CP einer Reglereinheit zum Hinregeln auf den Stellgrößenwert I_CP_Soll, insbesondere oder einen dazu proportionalen Wert, als Sollwert zugeführt wird, indem der Regler das Pulsmuster der Ansteuersignale der Halbleiterschalter der Halbbrücken bestimmt.**

## Claims

1. Method for operating a system
comprising a rectifier that can be powered from an electrical AC voltage power grid, an inverter that feeds an electric motor, and a DC-to-DC converter that is connected to an energy storage device,
the DC voltage-side terminal of the inverter is connected to the DC voltage-side terminal of the rectifier,
the electric motor in particular being powered from the AC voltage-side terminal of the inverter,
a first DC voltage-side terminal of the DC-to-DC converter being connected to the DC voltage-side terminal of the rectifier,
the DC voltage-side terminal of the inverter and the first DC voltage-side terminal of the DC-to-DC converter in particular being wired in parallel,
the DC-to-DC converter having a first housing in which a current detection means is arranged,
the current detection means detecting
- the current leaving the rectifier at the DC voltage-side terminal of the rectifier,
and the detected value being delivered to signal electronics which are arranged in the housing of the DC-to-DC converter and which generate actuation signals for semiconductor switches of the DC-to-DC converter,
the current detection means being arranged in the first housing, i.e. in the housing of the DC-to-DC converter, and being connected to a further electrical connection device, in particular a plug connector part, the further electrical connection device being electrically connected to the DC voltage-side terminal of the inverter.
**characterised in that**
the power (P_Netz) consumed by the rectifier from the AC voltage power grid is determined by multiplying the detected current leaving the DC voltage-side terminal of the rectifier by the voltage applied at the DC voltage-side terminal of the rectifier,
the inverter being arranged in a second, in particular different, housing, the second housing being arranged at a distance from the first housing,
the grid phase lines of the AC voltage power grid being supplied to an electrical connection device, in particular a plug connector part, arranged on or in the first housing,
the current detection means being electrically connected to the electrical connection device,
the signal electronics of the DC-to-DC converter comprising a controller unit which controls the power consumed from the AC voltage power grid, in particular by means of the rectifier, towards a setpoint **in that** a controller, in particular a PI controller, determines a setpoint for the charging current (I_CP_Soll) as a manipulated-variable signal from the curve of the difference between the power (P_Netz) consumed by the rectifier from the AC voltage power grid and a setpoint (P_Netz_Soll),
the detected charging current of the energy storage device being controlled towards the setpoint for the charging current (I_CP_Soll) by generating actuation signals for the semiconductor switches of the DC-to-DC converter (4) using a corresponding pulse pattern, a pilot control path, in particular a feedforward control path, being provided on the controller such that the power output or consumed by the electric motor via the inverter is active as a pilot control signal, in particular as a disturbance variable,
a signal that corresponds to a power loss being added to the manipulated variable,
said signal taking into account the no-load power of the system and the losses of the DC-to-DC converter (4),
the charging current being limited depending on the charge of the energy storage device, the rectifier being arranged in the housing of the DC-to-DC converter,
the DC-to-DC converter being configured as a dual cascaded buck-boost converter, i.e. the DC-to-DC converter has two parts wired in parallel,
the semiconductor switches of the parts being actuated in a clocked manner, temporally offset relative to one another,
the first part having a half-bridge at both the input and the output, the nodes of said half-bridges being connected via a first inductor L1,
the second part having a half-bridge at both the input and the output, the nodes of said half-bridges being connected via a second inductor L2,
a means being provided for detecting the summation current of the inductors, i.e. a means for detecting the sum of the currents flowing through the two inductors (L1, L2),
the means being implemented by a toroidal core around which the feed line associated with each inductor (L1, L2) is wound and around which an additional winding for detecting the induced voltage is implemented,
each half-bridge in particular being formed from a series circuit of two semiconductor switches,
the detected summation current I, as the charging current I_CP, being supplied to a controller unit to be controlled towards the manipulated-variable value I_CP_Soll, or in particular a value proportional thereto, as the setpoint, **in that** the controller determines the pulse pattern of the actuation signals of the semiconductor switches of the half-bridges.

## Revendications

1. Procédé pour exploiter un système,
comprenant un redresseur pouvant être alimenté à partir d'un réseau d'alimentation en courant alternatif, un onduleur, lequel alimente un moteur électrique, et un convertisseur CC/CC connecté à un accumulateur d'énergie,
le raccord côté tension continue de l'onduleur étant connecté au raccord côté tension continue du redresseur,
en particulier, le moteur électrique étant alimenté à partir du raccord côté tension alternative de l'onduleur,
un premier raccord côté tension continue du convertisseur CC/CC étant connecté au raccord côté tension continue du redresseur,
en particulier, le raccord côté tension continue de l'onduleur et le premier raccord côté tension continue du convertisseur CC/CC étant montés en parallèle,
le convertisseur CC/CC comprenant un premier boîtier, dans lequel un moyen de détection du courant est disposé,
le moyen de détection du courant :
- détecte au raccord côté tension continue du redresseur le courant sortant du redresseur et la valeur détectée est transmise à une électronique de signal disposée dans le boîtier du convertisseur CC/CC, laquelle génère des signaux de commande pour les interrupteurs à semi-conducteur du convertisseur CC/CC,
le moyen de détection du courant étant disposé dans le premier boîtier, c'est-à-dire dans le boîtier du convertisseur CC/CC, et connecté à un autre dispositif de connexion électrique, en particulier élément de connecteur, ledit autre dispositif de connexion électrique étant électriquement connecté au raccord côté tension continue de l'onduleur.
**caractérisé en ce que**
la puissance (P_Netz) prélevée par le redresseur à partir du réseau d'alimentation en courant alternatif est déterminée par multiplication du courant détecté sortant du raccord côté tension continue du redresseur et de la tension appliquée au raccord côté tension continue du redresseur, l'onduleur étant disposé dans un second boîtier, en particulier différent, le second boîtier étant espacé du premier boîtier,
les lignes de phase du réseau d'alimentation en courant alternatif étant acheminées à un dispositif de connexion électrique disposé sur ou dans le premier boîtier, en particulier élément de connecteur,
le moyen de détection du courant étant électriquement connecté au dispositif de connexion électrique,
l'électronique de signal du convertisseur CC/CC comprenant une unité de régulation, laquelle règle la puissance prélevée à partir du réseau d'alimentation en courant alternatif, en particulier via le redresseur, sur une valeur de consigne, **en ce que**
à partir de l'évolution de la différence entre la puissance (P_Netz) prélevée par le redresseur à partir du réseau d'alimentation en courant alternatif et une valeur de consigne (P_Netz_Soll), un régulateur, en particulier régulateur PI, détermine une valeur de consigne pour le courant de charge (I_CP_Soll) comme signal de grandeur de réglage.
le courant de charge détecté de l'accumulateur d'énergie étant réglé sur la valeur de consigne pour le courant de charge (I_CP_Soll), **en ce que** des signaux de commande pour les interrupteurs à semi-conducteur du convertisseur CC/CC (4) sont générés avec un motif d'impulsions correspondant,
une voie de précommande, en particulier voie d'application de perturbation, étant prévue au régulateur, de sorte qu'en tant que signal de précommande, en particulier perturbation, la puissance délivrée ou prélevée par le moteur électrique via l'onduleur est prise en compte,
un signal correspondant à une puissance de perte étant additionné à la grandeur de réglage,
lequel tient compte de la puissance à vide du système et des pertes du convertisseur CC/CC (4), le courant de charge étant limité en fonction de l'état de charge de l'accumulateur d'énergie,
le redresseur étant disposé dans le boîtier du convertisseur CC/CC,
le convertisseur CC/CC étant réalisé comme convertisseur abaisseur-élévateur double en cascade, c'est-à-dire que le convertisseur CC/CC comprend deux parties montées en parallèle,
les interrupteurs à semi-conducteur des parties étant commandés avec un décalage temporel relatif,
la première partie comprend un côté entrée et côté sortie respectivement un demi-pont**,** dont les nœuds sont connectés via une première inductance L1,
la seconde partie comprend un côté entrée et côté sortie respectivement un demi-pont, dont les nœuds sont connectés via une seconde inductance L2,
un moyen pour détecter le courant total des inductances étant prévu, c'est-à-dire un moyen pour détecter la somme des courants circulant dans les deux inductances (L1, L2),
le moyen étant réalisé par un tore, autour duquel la ligne d'alimentation respective de chaque inductance (L1, L2) est enroulée et autour duquel un enroulement supplémentaire pour détecter la tension induite est réalisé,
en particulier chaque demi-pont étant formé par un montage en série de deux interrupteurs à semi-conducteur,
le courant total détecté I étant transmis comme courant de charge I_CP à une unité de régulation pour régler sur la valeur de grandeur de réglage I_CP_Soll, en particulier ou une valeur proportionnelle, comme valeur de consigne, **en ce que** le régulateur détermine le motif d'impulsions des signaux de commande des interrupteurs à semi-conducteur des demi-ponts.
